# EUROPEAN PATENT APPLICATION

(11) **EP 4 406 684 A1**
(43) Date of publication of application: **31.07.2024**
(21) Application number: 21963196.7
(22) Date of filing: 02.11.2021
(51) Int. Cl.: B23H 7/10

(54) **DIE GUIDE FOR WIRE ELECTRICAL DISCHARGE MACHINING MACHINE**

(71) Applicant: FANUC CORPORATION, Oshino-mura Minamitsuru-gun Yamanashi 401-0597 (JP)
(72) Inventor: YOKOYAMA Satohiro, Yamanashi 401-0597 (JP); MAKINO Yoshinori, Yamanashi 401-0597 (JP); YAMANE Hikaru, Yamanashi 401-0597 (JP)
(74) Representative: Keil & Schaafhausen Patentanwälte PartGmbB
(86) International application number: PCT/JP2021/040426
(87) International publication number: WO 2023/079598

(57) **Abstract**

A die guide (28) for a wire electrical discharge machining machine (10) comprises: a first guide section (44) that has a first hole (56) that is larger than the cross-sectional area of a wire electrode; and a second guide section (48) that has a second hole (62) that is larger than the cross-sectional area of the wire electrode. The first hole is formed in the first guide section so as to restrict the movement of the wire electrode in a first direction that is orthogonal to a feed direction. A second hole is formed in the second guide section so as to restrict movement in a second direction that is orthogonal to the feed direction and is on the opposite side to the first direction, by being in contact with the wire electrode at at least two points in a cross-section that is orthogonal to the feed direction.

## Description

### TECHNICAL FIELD

The present invention relates to a die guide for a wire electrical discharge machine (wire electrical discharge machining machine).

### BACKGROUND ART

JP 2000-005935 A discloses a die guide for a wire electrical discharge machine. In the wire electrical discharge machine, a pair of die guides are arranged above and below a workpiece. A hole through which a wire electrode is passed is formed in the die guide. The upper die guide supports the wire electrode fed from a wire feeding unit to the workpiece. The lower die guide supports the wire electrode fed from the workpiece to a wire collection unit.

### SUMMARY OF THE INVENTION

In the wire electrical discharge machine, cutting of the wire electrode and feeding of the wire electrode are performed. There are cases where an end portion of the cut wire electrode may be thicker than the diameter of the wire electrode. In these cases, the end portion of the wire electrode is difficult to pass through the hole of the die guide.

When the hole of the die guide is large, it is relatively easy to insert the end portion of the wire electrode into the hole. However, when the hole of the die guide is large, the wire electrode is likely to move in a direction orthogonal to the feeding direction of the wire electrode in the hole of the die guide. As a result, the positioning accuracy of the wire electrode in a plane orthogonal to the feeding direction of the wire electrode is reduced. This reduces the accuracy of wire electrical discharge machining.

The present invention has the object of solving the aforementioned problem.

An aspect of the present invention is characterized by a die guide of a wire electrical discharge machine that supports a wire electrode in a manner so that the wire electrode is feedable in a feeding direction of the wire electrode, the die guide including: a first guide portion including a first hole through which the wire electrode passes, the first hole being larger than a cross sectional area of the wire electrode; and a second guide portion including a second hole through which the wire electrode passes, the second hole being larger than the cross sectional area of the wire electrode, wherein the first hole is formed in the first guide portion so as to restrict movement of the wire electrode in a first direction orthogonal to the feeding direction, and the second hole is formed in the second guide portion so as to restrict movement of the wire electrode in a second direction by contacting the wire electrode at at least two points, in a cross section orthogonal to the feeding direction, the second direction being orthogonal to the feeding direction and opposite to the first direction.

According to the present invention, the wire electrode can be easily inserted into the die guide, and the displacement of the wire electrode can be reduced. As a result, it is possible to suppress a decrease in the accuracy of wire electrical discharge machining.

### BRIEF DESCRIPTION OF DRAWINGS

FIG. 1 is a diagram schematically showing a configuration of part of a wire electrical discharge machine;
FIG. 2 is an enlarged cross sectional view of a head portion of a die guide according to a first embodiment;
FIG. 3 is a view showing a relationship between a wire electrode and first and second guide portions;
FIG. 4A is a cross sectional view taken along line IVA-IVA in FIG. 3;
FIG. 4B is a cross sectional view taken along line IVB-IVB of FIG. 3; and
FIG. 5 is an enlarged cross sectional view of a head portion of a die guide according to a second embodiment.

### DETAILED DESCRIPTION OF THE INVENTION

### [1. First Embodiment]

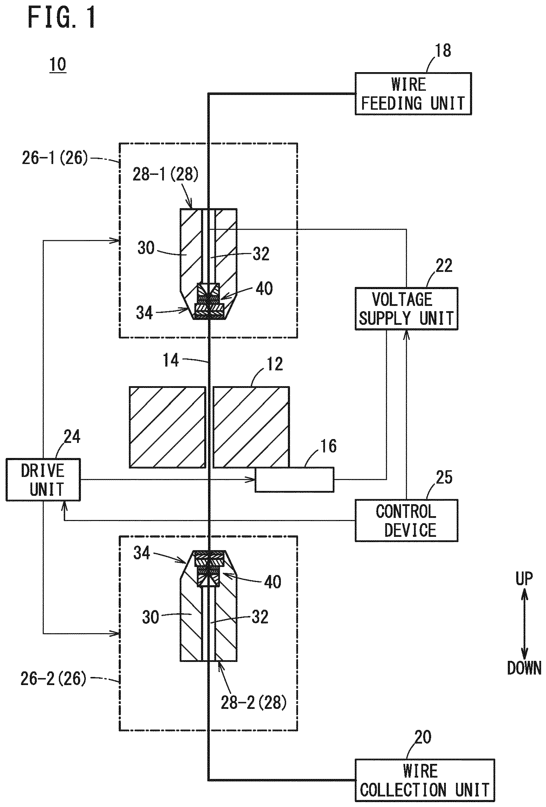

FIG. 1 is a diagram schematically showing a configuration of part of a wire electrical discharge machine 10. In the embodiment described below, the up-down direction is defined for convenience of description. Specifically, the feeding direction of a wire electrode 14 is defined as being downward at the position of a workpiece 12 to be machined by the wire electrical discharge machine 10. However, the feeding direction of the wire electrode 14 need not necessarily be downward.

The wire electrical discharge machine 10 machines the workpiece 12 by generating electrical discharge between the wire electrode 14 and the workpiece 12 (i.e., at an inter-electrode gap). The wire electrical discharge machine 10 includes the wire electrode 14, a table 16, a wire feeding unit 18, a wire collection unit 20, a voltage supply unit 22, a drive unit 24, a control device 25, and a pair of wire guides 26.

The wire electrode 14 is formed in a linear shape. The workpiece 12 is placed on the table 16. The wire electrode 14 is movable in an X direction and a Y direction. The X direction and the Y direction are orthogonal to each other and orthogonal to the up-down direction. The wire electrode 14 is tiltable with respect to the table 16. Instead of the wire electrode 14, the table 16 may be movable and tiltable. Alternatively, both the wire electrode 14 and the table 16 may be movable and tiltable.

The wire feeding unit 18 feeds the wire electrode 14 toward the workpiece 12 on the table 16. The wire feeding unit 18 includes a roller for feeding the wire electrode 14 wound around a wire bobbin toward the workpiece 12, a motor for driving the roller, and the like. The wire collection unit 20 collects the wire electrode 14 from the workpiece 12 on the table 16. The wire collection unit 20 includes a roller for collecting the wire electrode 14, a motor for driving the roller, and the like.

The voltage supply unit 22 supplies a pulse voltage between the wire electrode 14 and the workpiece 12 on the table 16. The voltage supply unit 22 includes a pulse power source connected to the wire electrode 14 and the table 16. The drive unit 24 drives the table 16, an upper wire guide 26-1, and a lower wire guide 26-2 individually. The drive unit 24 includes a plurality of motors and a plurality of power transmission mechanisms.

The control device 25 controls the voltage supply unit 22 in accordance with a machining program. To be specific, the control device 25 controls the pulse power source of the voltage supply unit 22 to generate electric discharge at the inter-electrode gap between the wire electrode 14 and the workpiece 12. The control device 25 controls the drive unit 24 in accordance with the machining program. To be more specific, the control device 25 controls the drive unit 24 so as to drive the table 16 and at least one of the two die guides 28, based on the machine coordinate system. The control device 25 controls the drive unit 24 so as to drive the motor of the wire feeding unit 18 and the motor of the wire collection unit 20.

The pair of wire guides 26 includes the upper wire guide 26-1 and the lower wire guide 26-2. The upper wire guide 26-1 and the workpiece 12 are relatively movable in the X direction and the Y direction. The upper wire guide 26-1 is positioned between the wire feeding unit 18 and the workpiece 12. The lower wire guide 26-2 and the workpiece 12 are relatively movable in the X direction and the Y direction. The lower wire guide 26-2 is positioned between the workpiece 12 and the wire collection unit 20.

Each wire guide 26 has a die guide 28. The die guide 28 of the upper wire guide 26-1 is also referred to as a die guide 28-1. The die guide 28 of the lower wire guide 26-2 is also referred to as a die guide 28-2. The die guide 28-1 is held at a predetermined position in the upper wire guide 26-1 by a guide block (not shown). The die guide 28-2 is held at a predetermined position in the lower wire guide 26-2 by a guide block (not shown).

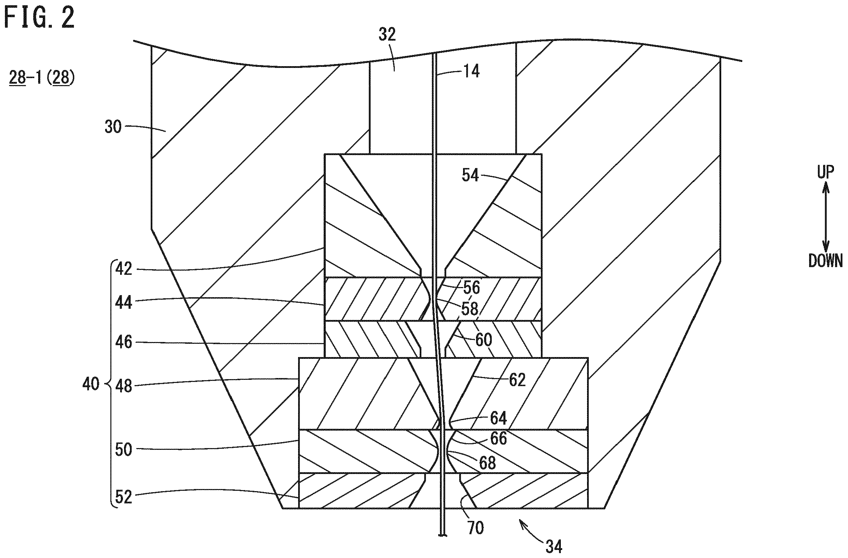

FIG. 2 is an enlarged cross sectional view of a head portion 34 of the die guide 28-1 according to the first embodiment. The die guide 28-1 includes a guide main body 30 and a wire insertion hole 32 formed in the guide main body 30. The head portion 34 of the die guide 28-1 is located at a position (lower side in FIG. 2) in the die guide 28-1 that is closest to the workpiece 12.

The wire insertion hole 32 penetrates the guide main body 30 in the up-down direction. The wire electrode 14 is inserted into the wire insertion hole 32 from above. A guide portion 40 is accommodated in the wire insertion hole 32 located at the head portion 34.

The guide portion 40 guides the wire electrode 14 in the feeding direction of the wire electrode 14. The guide portion 40 supports the wire electrode 14 such the wire electrode is feedable in the feeding direction of the wire electrode 14. The guide portion 40 restricts the movement of the wire electrode 14 in a direction orthogonal to the feeding direction of the wire electrode 14.

The guide portion 40 includes a first auxiliary member 42, a first guide portion 44, a second auxiliary member 46, a second guide portion 48, a tapered guide portion 50, and a third auxiliary member 52. Each of the first auxiliary member 42, the second auxiliary member 46, and the third auxiliary member 52 is made of, for example, ceramics. Each of the first guide portion 44, the second guide portion 48, and the tapered guide portion 50 is made of, for example, diamond.

The first auxiliary member 42 is positioned at the uppermost portion of the guide portion 40. The first guide portion 44 is positioned below the first auxiliary member 42. The upper surface of the first guide portion 44 abuts against the lower surface of the first auxiliary member 42. The second auxiliary member 46 is positioned below the first guide portion 44. The upper surface of the second auxiliary member 46 abuts against the lower surface of the first guide portion 44. The second guide portion 48 is positioned below the second auxiliary member 46. The upper surface of the second guide portion 48 abuts against the lower surface of the second auxiliary member 46. The tapered guide portion 50 is positioned below the second guide portion 48. The upper surface of the tapered guide portion 50 abuts against the lower surface of the second guide portion 48. The third auxiliary member 52 is positioned below the tapered guide portion 50. The upper surface of the third auxiliary member 52 abuts against the lower surface of the tapered guide portion 50. The third auxiliary member 52 is positioned at the lowermost portion of the guide portion 40.

The first auxiliary member 42 has a first auxiliary hole 54 penetrating in the up-down direction. The first auxiliary hole 54 communicates with the wire insertion hole 32 positioned upward.

The first guide portion 44 has a first hole 56 penetrating in the up-down direction. The first hole 56 has a first narrowed portion 58 formed between the upper opening and the lower opening. The diameter of the first hole 56 gradually decreases from the upper opening of the first hole 56 toward the first narrowed portion 58. The diameter of the first hole 56 gradually increases from the first narrowed portion 58 toward the lower opening of the first hole 56. That is, the diameter at the first narrowed portion 58 is smallest in the first hole 56. The first hole 56 communicates with the first auxiliary hole 54. The diameter of the upper opening of the first hole 56 is equal to or larger than the diameter of the lower opening of the first auxiliary hole 54. Therefore, the wire electrode 14 can be easily inserted into the first hole 56 from above.

The second auxiliary member 46 has a second auxiliary hole 60 penetrating in the vertical direction. The second auxiliary hole 60 communicates with the first hole 56.

The second guide portion 48 has a second hole 62 penetrating in the up-down direction. The diameter of the second hole 62 gradually decreases toward the lower side. The diameter of the second hole 62 may be substantially constant at the lower portion of the second guide portion 48. Alternatively, the diameter of the second hole 62 may gradually increase toward the lower side at the lower portion of the second guide portion 48. A portion of the second hole 62 having the smallest diameter is referred to as a second narrowed portion 64. The second hole 62 communicates with the second auxiliary hole 60. The diameter of the upper opening of the second hole 62 is equal to or larger than the diameter of the lower opening of the second auxiliary hole 60. Therefore, the wire electrode 14 can be easily inserted into the second hole 62 from above.

The tapered guide portion 50 has a tapered guide hole 66 penetrating in the up-down direction. The tapered guide portion 50 restricts the inclination angle of the wire electrode 14 during taper machining. The tapered guide hole 66 has a third narrowed portion 68 formed between the upper opening of the tapered guide hole 66 and the lower opening thereof. The diameter of the tapered guide hole 66 gradually decreases from the upper opening of the tapered guide hole 66 toward the third narrowed portion 68. The diameter of the tapered guide hole 66 gradually increases from the third narrowed portion 68 toward the lower opening of the tapered guide hole 66. That is, the diameter at the third narrowed portion 68 is smallest in the tapered guide hole 66. The tapered guide hole 66 communicates with the second hole 62. The diameter of the upper opening of the tapered guide hole 66 is equal to or larger than the diameter of the lower opening of the second hole 62. Therefore, the wire electrode 14 can be easily inserted into the tapered guide hole 66 from above.

The third auxiliary member 52 has a third auxiliary hole 70 penetrating in the up-down direction. The third auxiliary hole 70 communicates with the tapered guide hole 66.

In the die guide 28-1 of the upper wire guide 26-1, the wire electrode 14 passes through the first auxiliary hole 54, the first hole 56, the second auxiliary hole 60, the second hole 62, the tapered guide hole 66, and the third auxiliary hole 70 in this order. The feeding direction of the wire electrode 14 substantially coincides with the downward direction.

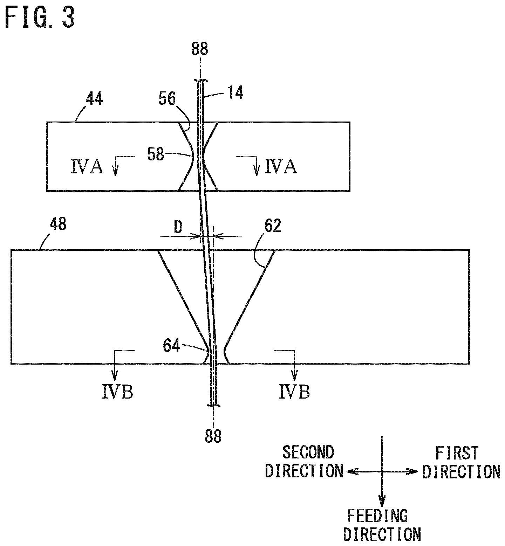

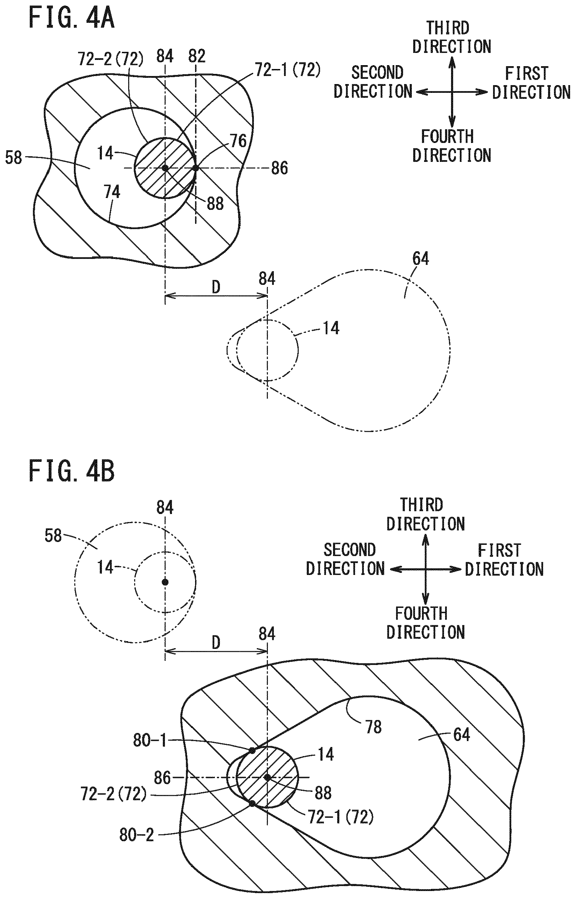

FIG. 3 is a view showing the relationship between the wire electrode 14 and the first guide portion 44 and the second guide portion 48. FIG. 4A is a cross sectional view taken along line IVA-IVA of FIG. 3. FIG. 4B is a cross sectional view taken along line IVB-IVB of FIG. 3. Hereinafter, the "feeding direction of the wire electrode 14" is simply referred to as a "feeding direction". In FIG. 3, the feeding direction is downward. Here, directions orthogonal to the feeding direction are referred to as a first direction, a second direction, a third direction, and a fourth direction. The second direction is a direction opposite to the first direction. The third direction is a direction opposite to the fourth direction. The first direction and the second direction are orthogonal to the third direction and the fourth direction.

As shown in FIG. 4A, the cross sectional area of the first narrowed portion 58 is larger than the cross sectional area of the wire electrode 14. In the present embodiment, the cross sectional shape of the first narrowed portion 58 is circular. That is, the diameter of the cross section of the first narrowed portion 58 is larger than the diameter of the cross section of the wire electrode 14. For example, the diameter of the first narrowed portion 58 is preferably not less than twice the diameter of the wire electrode 14. However, the diameter of the first narrowed portion 58 may be larger than the diameter of the wire electrode 14 and smaller than twice the diameter of the wire electrode 14 as long as the wire electrode 14 can easily pass through the first narrowed portion 58. A first inner peripheral surface 74 of the first guide portion 44 is positioned around the first narrowed portion 58. In a cross section orthogonal to the feeding direction, the first inner peripheral surface 74 and an outer peripheral surface 72 of the wire electrode 14 are in contact with each other at one point. This point is referred to as a first contact point 76. The cross sectional shape of the first narrowed portion 58 may be any annular shape. Therefore, the cross sectional shape of the first narrowed portion 58 may be an elliptical shape.

As shown in FIG. 4B, the cross sectional area of the second narrowed portion 64 is larger than the cross sectional area of the wire electrode 14. For example, the cross sectional shape of the second narrowed portion 64 is a shape in which the hole becomes narrower toward the second direction. For example, the length of the second narrowed portion 64 in the second direction is preferably not less than twice the diameter of the wire electrode 14. However, as long as the wire electrode 14 easily passes through the second narrowed portion 64, the length of the second narrowed portion 64 in the second direction may be larger than the diameter of the wire electrode 14 and less than twice the diameter of the wire electrode 14. A second inner peripheral surface 78 of the second guide portion 48 is positioned around the second narrowed portion 64. In a cross section orthogonal to the feeding direction, the second inner peripheral surface 78 and the outer peripheral surface 72 of the wire electrode 14 are in contact with each other at two points. These two points are referred to as second contact points 80-1 and 80-2.

The positions of the contact points will be described using a tangent line 82 to the wire electrode 14 at the first contact point 76, an imaginary line 84, and a normal line 86 to the wire electrode 14 at the first contact point 76. The tangent line 82 extends along a cross section orthogonal to the feeding direction. The imaginary line 84 is parallel to the tangent line 82 and passes through the position of a diameter center 88 of the wire electrode 14. The normal line 86 extends along a cross section orthogonal to the feeding direction. A part of the outer peripheral surface 72 of the wire electrode 14 that is located on the first direction side with reference to the imaginary line 84 is referred to as a first outer peripheral surface 72-1. A part of the outer peripheral surface 72 of the wire electrode 14 that is located on the second direction side with reference to the imaginary line 84 is referred to as a second outer peripheral surface 72-2.

The first contact point 76 is located on the first outer peripheral surface 72-1. Each of the second contact point 80-1 and the second contact point 80-2 is located on the second outer peripheral surface 72-2. Further, the second contact point 80-1 is located on the third direction side with respect to the normal line 86. The second contact point 80-2 is located on the fourth direction side with respect to the normal line 86. That is, the first contact point 76 is located between the second contact point 80-1 and the second contact point 80-2 in the line direction of the imaginary line 84.

In the line direction of the normal line 86, the position of the diameter center 88 of the wire electrode 14 in the second narrowed portion 64 is shifted from the position of the diameter center 88 of the wire electrode 14 in the first narrowed portion 58. For example, the position of the diameter center 88 of the wire electrode 14 in the first narrowed portion 58 and the position of the diameter center 88 of the wire electrode 14 in the second narrowed portion 64 are separated from each other by a distance D.

The first guide portion 44 restricts movement of the wire electrode 14 in the first direction by contacting the wire electrode 14 at the first contact point 76. The second guide portion 48 restricts movement of the wire electrode 14 in the second direction by contacting the wire electrode 14 at two second contact points 80-1 and 80-2. The second guide portion 48 restricts the movement of the wire electrode 14 in the third direction by contacting the wire electrode 14 at the second contact point 80-1. The second guide portion 48 restricts the movement of the wire electrode 14 in the fourth direction by contacting the wire electrode 14 at the second contact point 80-2. In this way, each of the first guide portion 44 and the second guide portion 48 reduces the displacement of the wire electrode 14.

The cross sectional area of the first narrowed portion 58, which is smallest in the first hole 56, is larger than the cross sectional area of the wire electrode 14. The cross sectional area of the second narrowed portion 64, which is smallest in the second hole 62, is larger than the cross sectional area of the wire electrode 14. The cross sectional area of the third narrowed portion 68, which is smallest in the tapered guide hole 66, is larger than the cross sectional area of the wire electrode 14. The cross sectional area of the smallest portion of the first auxiliary hole 54, the cross sectional area of the smallest portion of the second auxiliary hole 60, and the cross sectional area of the smallest portion of the third auxiliary hole 70 are each larger than the cross sectional area of the wire electrode 14. Therefore, the wire electrode 14 can be easily passed through each hole.

Incidentally, the die guide 28-2 of the lower wire guide 26-2 also includes the first auxiliary member 42, the first guide portion 44, the second auxiliary member 46, the second guide portion 48, the tapered guide portion 50, and the third auxiliary member 52. The shape of the die guide 28-2 of the lower wire guide 26-2 is slightly different from the shape of the die guide 28-1 of the upper wire guide 26-1. The guide portions 40 also have different shapes. However, the two die guides 28 have the following in common: the first guide portion 44 contacts the wire electrode 14 at one point and the second guide portion 48 contacts the wire electrode 14 at two points.

### [2. Second Embodiment]

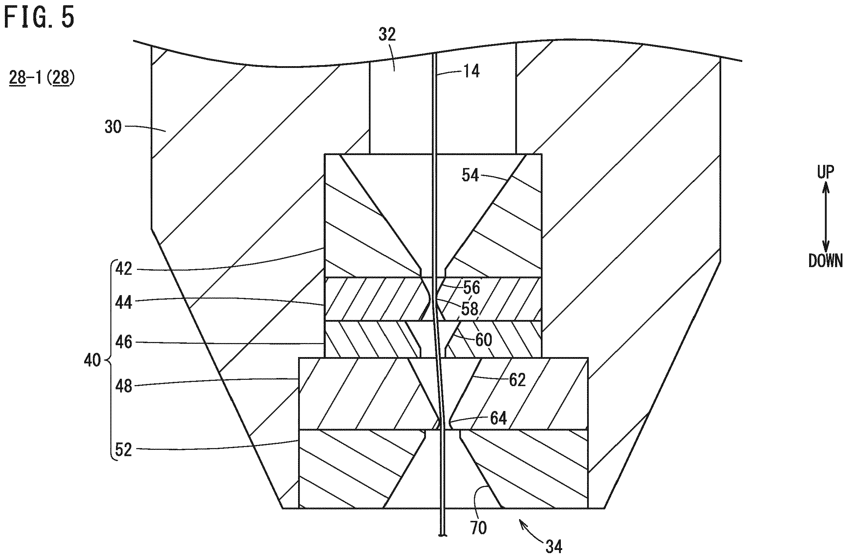

FIG. 5 is an enlarged cross sectional view of the head portion 34 of the die guide 28-1 according to a second embodiment. The guide portion 40 of the second embodiment does not have the tapered guide portion 50. The die guide 28-1 of the second embodiment is the same as the die guide 28-1 of the first embodiment except that the tapered guide portion 50 is not provided. The same applies to the die guide 28-2.

### [3. Other Embodiments]

The guide portion 40 of the first embodiment is provided with three auxiliary members. However, the number and shape of the auxiliary members provided in the guide portion 40 are not limited.

The guide portion 40 may include one or more members that restrict the movement of the wire electrode 14 in addition to the first guide portion 44 and the second guide portion 48.

In the guide portion 40, the second guide portion 48 may be provided at the position of the first guide portion 44, and the first guide portion 44 may be provided at the position of the second guide portion 48.

In the second narrowed portion 64, the second inner peripheral surface 78 may be in contact with the wire electrode 14 at three or more points.

In the cross section orthogonal to the feeding direction, the portions around the second contact points 80-1 and 80-2 that come into contact with the wire electrode 14 may have linear shapes or curved shapes.

The above-described embodiments may be combined.

### [4. Inventions that can be Obtained from the Embodiments]

The invention graspable from the embodiments described above will be described below.

An aspect of the present invention is characterized by the die guide (28) of the wire electrical discharge machine (10) that supports the wire electrode (14) in a manner so that the wire electrode is feedable in the feeding direction of the wire electrode, the die guide including: the first guide portion (44) including the first hole (56) through which the wire electrode passes, the first hole being larger than the cross sectional area of the wire electrode; and the second guide portion (48) including the second hole (62) through which the wire electrode passes, the second hole being larger than the cross sectional area of the wire electrode, wherein the first hole is formed in the first guide portion so as to restrict movement of the wire electrode in the first direction orthogonal to the feeding direction, and the second hole is formed in the second guide portion so as to restrict movement of the wire electrode in the second direction by contacting the wire electrode at at least two points, in the cross section orthogonal to the feeding direction, the second direction being orthogonal to the feeding direction and opposite to the first direction.

In the present invention, the first hole may restrict movement of the wire electrode in the first direction by contacting the wire electrode at one point, in the cross section orthogonal to the feeding direction, and in the cross section orthogonal to the feeding direction, the second hole may be in contact with the wire electrode at at least two points on the half peripheral surface (72-2) of the wire electrode, the half peripheral surface being located on a side opposite to the first contact point (76) with reference to the imaginary line (84), wherein the first contact point is a point at which the wire electrode is in contact with the first hole, and the imaginary line is parallel to the tangent line (82) of the wire electrode at the first contact point and passes through the diameter center position of the wire electrode.

In the present invention, in the line direction of the imaginary line, the first contact point may be located between two second contact points (80-1, 80-2) at which the second hole is in contact with the wire electrode.

In the present invention, the first hole may have a circular shape in the cross section orthogonal to the feeding direction.

In the present invention, in the cross section orthogonal to the feeding direction, the second hole may have a shape in which the second hole becomes narrower toward the second direction.

In the present invention, in the cross section orthogonal to the feeding direction, in the line direction of the normal line (86) to the wire electrode at the first contact point, the diameter center position (88) of the wire electrode in the second hole may be shifted from the diameter center position (88) of the wire electrode in the first hole.

The present invention may further include the tapered guide portion (50) located closer to the workpiece (12) to be machined by the machining, than the first guide portion and the second guide portion.

### Reference Signs List

- 10:: wire electrical discharge machine
- 12:: workpiece
- 14:: wire electrode
- 28:: die guide
- 44:: first guide portion
- 48:: second guide portion
- 50:: tapered guide portion
- 56:: first hole
- 62:: second hole
- 72-2:: second outer peripheral surface (half peripheral surface)
- 76:: first contact point
- 80-1, 80-2:: second contact point
- 82:: tangent line
- 84:: imaginary line
- 86:: normal line
- 88:: diameter center (diameter center position)

## Claims

1. A die guide (28) of a wire electrical discharge machine (10) that supports a wire electrode (14) in a manner so that the wire electrode is feedable in a feeding direction of the wire electrode, the die guide comprising:
a first guide portion (44) including a first hole (56) through which the wire electrode passes, the first hole being larger than a cross sectional area of the wire electrode; and
a second guide portion (48) including a second hole (62) through which the wire electrode passes, the second hole being larger than the cross sectional area of the wire electrode,
wherein
the first hole is formed in the first guide portion so as to restrict movement of the wire electrode in a first direction orthogonal to the feeding direction, and
the second hole is formed in the second guide portion so as to restrict movement of the wire electrode in a second direction by contacting the wire electrode at at least two points, in a cross section orthogonal to the feeding direction, the second direction being orthogonal to the feeding direction and opposite to the first direction.

2. The die guide of the wire electrical discharge machine according to claim 1, wherein
the first hole restricts movement of the wire electrode in the first direction by contacting the wire electrode at one point, in the cross section orthogonal to the feeding direction, and
in the cross section orthogonal to the feeding direction, the second hole is in contact with the wire electrode at at least two points on a half peripheral surface (72-2) of the wire electrode, the half peripheral surface being located on a side opposite to a first contact point (76) with reference to an imaginary line (84), wherein the first contact point is a point at which the wire electrode is in contact with the first hole, and the imaginary line is parallel to a tangent line (82) of the wire electrode at the first contact point (76) and passes through a diameter center position of the wire electrode.

3. The die guide of the wire electrical discharge machine according to claim 2, wherein
in a line direction of the imaginary line, the first contact point is located between two second contact points (80-1, 80-2) at which the second hole is in contact with the wire electrode.

4. The die guide of the wire electrical discharge machine according to any one of claims 1 to 3, wherein
the first hole has a circular shape in the cross section orthogonal to the feeding direction.

5. The die guide of the wire electrical discharge machine according to any one of claims 1 to 4, wherein
in the cross section orthogonal to the feeding direction, the second hole has a shape in which the second hole becomes narrower toward the second direction.

6. The die guide of the wire electrical discharge machine according to claim 2, wherein
in the cross section orthogonal to the feeding direction, in a line direction of a normal line (86) to the wire electrode at the first contact point, a diameter center position (88) of the wire electrode in the second hole is shifted from a diameter center position (88) of the wire electrode in the first hole.

7. The die guide of the wire electrical discharge machine according to any one of claims 1 to 6, further comprising:
a tapered guide portion (50) located closer to a workpiece (12) to be machined by the wire electrical discharge machine, than the first guide portion and the second guide portion.
